(19) Europäisches Patentamt
European Patent Office
Office européen des brevets

(11) **EP 2 129 708 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(21) Anmeldenummer: **08718013.9**

(22) Anmeldetag: **19.03.2008**

(51) Int Cl.:
*C08J 5/12* (2006.01)        *B60K 15/035* (2006.01)
*F16L 47/26* (2006.01)

(86) Internationale Anmeldenummer:
**PCT/EP2008/053288**

(87) Internationale Veröffentlichungsnummer:
**WO 2008/113821 (25.09.2008 Gazette 2008/39)**

(54) **KRAFTSTOFFTANKANBAUTEIL UND VERFAHREN ZUR HERSTELLUNG EINES KRAFTSTOFFTANKANBAUTEILS**

FUEL TANK ATTACHMENT AND METHOD FOR PRODUCING A FUEL TANK ATTACHMENT

COMPOSANT RAPPORTÉ POUR RÉSERVOIR DE CARBURANT ET PROCÉDÉ DE FABRICATION D'UN COMPOSANT RAPPORTÉ POUR RÉSERVOIR DE CARBURANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.03.2007 DE 102007013472**

(43) Veröffentlichungstag der Anmeldung:
**09.12.2009 Patentblatt 2009/50**

(73) Patentinhaber: **Feichtinger, Reinhard**
**91785 Pleinfeld-Ramsberg (DE)**

(72) Erfinder:
• **FEICHTINGER, Reinhard**
**91785 Pleinfeld-Ramsberg (DE)**
• **AMESÖDER, Simon**
**91719 Heidenheim (DE)**

(74) Vertreter: **Richardt, Markus Albert**
**Richardt Patents Trademarks**
**Wilhelmstraße 7**
**65185 Wiesbaden (DE)**

(56) Entgegenhaltungen:
EP-A- 1 108 653        WO-A-2007/029942
DE-C1- 19 535 413      US-A1- 2006 099 365

**Beschreibung**

Die Erfindung betrifft ein Kraftstofftankanbauteil, einen Kraftstofftank, insbesondere einen Kraftfahrzeugkraftstofftank, sowie ein Verfahren zur Herstellung eines Kraftstofftankanbauteils.

Aus der DE 195 35 413 C1 ist ein Bauteil bekannt, das aus einem rohrförmigen Körper aus thermoplastischem Kunststoff, der an einem Ende einen abgestuften Ringkörper und am entgegen gesetzten Ende eine Halterippe aufweist, besteht. Versetzt um die Wandstärke des Körpers gegenüber dem Körperinnendurchmesser ist ein umlaufender Ring mit einem Vorsprung angeformt. In den abgestuften Ringkörper ist als Haftvermittler eine Zwischenschicht eingebracht. Darunter ist unter Einschluss des Rings mit dem Vorsprung ein Ringkörperelement angeformt. Durch Erhitzen werden dann das Ringkörperelement, die Zwischenschicht und der umlaufende Ring des rohrförmigen Körpers zusätzlich zu der mechanischen Verbindung, die der umlaufende Vorsprung bewirkt, miteinander verbunden.

Da diese Form der Verbindung einer Quellung der Kunststoffe nicht standhält, wird nach DE 100 62 997 A1 der Kunststoff des Ringkörperelements in der Weise vernetzt, dass eine chemische Verbindung zwischen den Kunststoffen beider Teile durch Brückenbildung über die Grenzfläche zwischen den Teilen hinweg bewirkt wird. Der rohrförmige Körper wird an seinem zum Behälter zeigenden Ende in einen Innen- und einen Außenrohrkörper geteilt.

Der Innenrohrkörper ragt dabei bis zur halben Wandstärke des Behälters in die Öffnung hinein. Der Außenrohrkörper schließt das Ringköperelement wenigstens teilweise ein. Das Ringköperelement hat dabei einen Innendurchmesser, der größer als der Durchmesser der Öffnung ist.

Nachteilig ist bei beiden bekannten Lösungen, dass die Verbindung zwischen dem rohrförmigen Körper und dem Ringkörperelement material - und kostenaufwendig ist.

Dem gegenüber liegt der Erfindung die Aufgabe zu Grunde, ein verbessertes Kraftstofftankanbauteil, einen Kraftstofftank und ein Verfahren zur Herstellung eines Kraftstofftankanbauteils zu schaffen.

Die der Erfindung zu Grunde liegenden Aufgaben werden jeweils mit den Merkmalen der unabhängigen Patenansprüche gelöst. Ausführungsformen der Erfindung sind in den abhängigen Patentansprüchen angegeben.

Ausführungsformen der Erfindung haben insbesondere den Vorteil, dass das Kraftstofftankanbauteil kostengünstig herzustellen ist und betriebssicher mit einem Kraftstofftank zu verbinden ist.

Unter einem "Kraftstofftankanbauteil" werden hier alle Bauteile verstanden, die sich zum Anbauen an einen Kraftstofftank eignen, insbesondere Stutzen, Ventile, insbesondere Tankentfüftungsventile, Verschlusselemente oder dergleichen.

Nach Ausführungsformen der Erfindung hat das Kraftstofftankanbauteil einen ersten Bereich, der einen ersten Kunststoff aufweist. Der erste Bereich ist nach dem Anbau des Kraftstofftankanbauteils an einen Kraftstofftank dem Kraftstoff zumindest zeitweise ausgesetzt. Bei dem ersten Kunststoff handelt es sich daher um kraftstoffbeständigen Kunststoff. Unter einem kraftstoffbeständigen Kunststoff wird hier ein Kunststoff verstanden, der nicht oder nur wenig aufquillt, wenn er über längere Zeit einem Kraftstoff oder Öl ausgesetzt wird.

Bei dem ersten kraftstoffbeständigen Kunststoff handelt es sich um Polyamid (PA), insbesondere PA 12.

Das Kraftstofftankanbauteil hat zumindest einen zweiten Bereich, der normalerweise nicht unmittelbar mit dem Kraftstoff in Berührung kommt. Der zweite Bereich besteht aus einer Mischung des ersten Kunststoffs mit einem zweiten Kunststoff. Bei dem zweiten Kunststoff handelt es sich um einen nicht kraftstoffbeständigen Kunststoff.

Unter einem "nicht kraftstoffbeständigen Kunststoff" wird hier ein Kunststoff verstanden, der aufquillt oder sonst in seinen Abmessungen oder mechanischen Eigenschaften wesentlich verändert wird, wenn er über einen längeren Zeitraum mit Kraftstoff in Berührung kommt. Bei dem zweiten nicht kraftstoffbeständigen Kunststoff handelt es sich um Polyethylen (PE).

Der erste und der zweite Kunststoff sind an sich nicht mischbar. Die Mischung beinhaltet daher einen Kompatibilisator, um die ersten und zweiten Kunststoffe miteinander mischbar zu machen.

Der erste und der zweite Bereich sind stoffschlüssig miteinander verbunden. Beispielsweise kann es sich bei der stoffschlüssigen Verbindung um eine Schweißverbindung handeln. Die stoffschlüssige Verbindung kann auch durch Zwei oder Mehrkomponenten-Kunststoff-Spritzguss erzeugt werden.

Die stoffschlüssige Verbindung zwischen dem ersten Bereich, der den ersten Kunststoff aufweist, und dem zweiten Bereich, der unter anderem den zweiten Kunststoff aufweist, der nicht mit dem ersten Kunststoff mischbar ist, wird dadurch ermöglicht, dass der zweite Bereich neben dem zweiten Kunststoff auch den ersten Kunststoff beinhaltet.

Dies ist insbesondere vorteilhaft, um die Kosten des Kraftstofftankanbauteils zu senken. Im Allgemeinen ist nämlich der erste kraftstoffbeständige Kunststoff wesentlich teurer, als der zweite nicht kraftstoffbeständige Kunststoff. Da die ersten und zweiten Kunststoffe aber nicht miteinander mischbar sind und daher normalerweise keine stoffschlüssige, fluiddichte Verbindung zwischen den beiden Kunststoffen hergestellt werden kann, wird gemäß Stand der Technik im Allgemeinen das Kraftstofftankanbauteil nur aus dem ersten Kunststoff bestehen, was entsprechend teuer ist.

Hier schafft die Erfindung Abhilfe, indem sie es ermöglicht, nur diejenigen ersten Bereiche des Kraftstofftankanbauteils, die dem Kraftstoff im Normalbetrieb, d.h.

nach Anbau an einen Kraftstofftank und Befüllung des Kraftstofftanks mit Kraftstoff, ausgesetzt sind, aus dem ersten Kunststoff zu fertigen, wohingegen ein oder mehrere zweite Bereiche, die dem Kraftstoff normalerweise nicht ausgesetzt sind, aus der Mischung gefertigt sind, die nur einen gewissen Anteil des ersten Kunststoffs aufweist, um die stoffschlüssige Verbindung mit den ersten Bereichen zu ermöglichen.

Ferner haben Ausführungsformen der Erfindung auch mechanische Vorteile: Der zweite Bereich ist mit dem ersten Bereich über eine erste Fügefläche verbunden. Der zweite Bereich ist seinerseits mit einem dritten Bereich über eine zweite Fügefläche verbunden, wobei es sich bei dem dritten Bereich z.B. um die Außenwandung eines Kraftstofftanks handeln kann. Die Verbindung des ersten Bereichs mit dem dritten Bereich erfolgt also über zwei Fügeflächen. Dies hat den Vorteil, dass die mechanische Spannung in den Fügeflächen relativ gering ist, so dass ein besonders betriebssicheres System geschaffen wird.

Die von dem ersten Bereich zu dem dritten Bereich aufeinander folgenden Materialien haben nämlich gestaffelt Eigenschaften: Zum einen hat der erste Bereich, der aus PA ist, die höchste Grundsteifigkeit. Der zweite Bereich, der aus der Mischung besteht, hat eine geringere Grundsteifigkeit als der erste Bereich, und der dritte Bereich, der aus PE besteht, hat die geringste Grundsteifigkeit.

Genau entgegengesetzt verhält es sich bezüglich des Quellverhaltens der verschiedenen Bereiche: Der erste Bereich aus dem kraftstoffbeständigen Kunststoff hat das geringste Quelleverhalten, der zweite Bereich ein mittleres Quellverhalten und der dritte Bereich aus dem nicht kraftstoffbeständigen Kunststoff das größte Quellverhalten. Der erste Bereich quillt also bei Kontakt mit dem Kraftstoff am wenigsten auf, der dritte Bereich am meisten. Dieses gestaffelte Quellverhalten korrespondiert zu den gestaffelten Grundsteifigkeiten und führt insgesamt zu einer Reduktion der mechanischen Belastung der Fügeflächen.

Bei dem Kompatibilisator handelt es sich um ein Copolymer der ersten und zweiten Kunststoffe. Die Verwendung eines solchen Kompatibilisators hat insbesondere den Vorteil, dass nicht noch ein weiterer von den ersten und zweiten Kunststoffen verschiedener Werkstoff in die Mischung eingebracht werden muss. Ein solcher weiterer Werkstoff könnte nämlich hinsichtlich der Dichtigkeit und Langzeitbeständigkeit problematisch sein.

Nach einer Ausführungsform der Erfindung handelt es sich bei dem Polymer um ein "gepfropftes Copolymer". Unter einem "gepfropftes Copolymer" wird hier ein Copolymer verstanden, das wie folgt hergestellt wird: Zur Herstellung des gepfropften Copolymers wird einer der ersten und zweiten Kunststoffe gepfropft, so dass der gepfropfte Kunststoff dann mit dem anderen der beiden Kunststoffe kovalente Bindungen eingehen kann. Die Pfropfung des Kunststoffs erfolgt beispielsweise mit einem reaktiven Rest, wie zum Beispiel einen Maleinsäureanhydrid oder einem Acetylsäurerest. Das Copolymer wirkt dann in der Mischung der ersten und zweiten Kunststoffe ähnlich wie ein Emulgator.

Nach einer Ausführungsform der Erfindung wird das Copolymer mit Hilfe eines zusätzlichen Kompatibilisators hergestellt, der einer Mischung des ersten und des zweiten Kunststoffs in fester oder flüssiger Form zugegeben wird, und der zumindest teilweise bei der Copolymerisierung verbraucht wird. Der zusätzliche Kompatibilisator reagiert dabei sowohl mit dem ersten also auch mit dem zweiten Kunststoff.

Nach einer Ausführungsform der Erfindung beinhaltet der zusätzliche Kompatibilisator reaktive Isocyanatgruppen und/oder Oligomere mit Epoxidgruppen und/oder (Maleinsäure-)Anhydrid-Gruppen oder Oxazolin-Gruppen.

Nach einer Ausführungsform der Erfindung ist der Anteil des ersten Kunststoffs an der Mischung geringer als der Anteil des zweiten Kunststoffs. Beispielsweise kann der Anteil des ersten Kunststoffs maximal 35 Gew. %, insbesondere zwischen 20 Gew.-% und 30 Gew.-% betragen.

Der zweite Bereich ist für eine stoffschlüssige Verbindung mit einem dritten Bereich ausgebildet, wobei sich der dritte Bereich an einer Außenwandung eines Kraftstofftanks befindet. Der dritte Bereich besteht aus dem zweiten Kunststoff, so dass aufgrund des Vorhandenseins des zweiten Kunststoffs in der Mischung die stoffschlüssige Verbindung realisierbar ist.

Es stellt sich deshalb die Aufgabe, ein Bauteil aus wenigstens teilweise einem thermoplastischen Material der eingangs genannten Art so weiter zu entwickeln, dass es einfach herzustellen und sicher mit einem Behälter aus überwiegend einem anderen thermoplastischen Material zu verbinden ist.

Nach Ausführungsformen der Erfindung ist besonders vorteilhaft, dass das Kraftstofftankanbauteil im Wesentlichen aus zwei Hauptbauelementen, nämlich einem Rohrkörperelement mit dem in einem Abstand von einer Rohraustrittsöffnung angeordneten Ringkörperelement, d.h. einem ersten Bauelement aus dem ersten Kunststoff, und einem Flanschkörper, d.h. einem zweiten Bauelement aus der Mischung, bestehen kann. Beide Teile sind einfach und kostengünstig herzustellen und danach einfach flüssigkeitsdicht miteinander zu verbinden. Dadurch, dass der Abstand von der Rohraustrittsöffnung des am Rohrkörperelement angeordneten Ringkörperelements größer als die Dicke des Flanschkörpers ist, ragt das Rohrkörperelement in die Öffnung des Behälters hinein. Das Rohrkörperelement sitzt damit wie ein Korken in der Öffnung, so dass es mechanischen Belastungen, vor allem seitwärts gerichteter Kräfte standhalten kann.

Das Kraftstofftankanbauteil kann beispielsweise eine Funktion als Stutzen, Tankentlüftungsventil, Verschlusselement oder dgl. wahrnehmen. In verschiedenen Einsatzfällen wird die Befestigung auf die gleiche Art und Weise vorgenommen, indem bei allen Ausführungsformen Ringkörperelement und Rohrkörperelement im wesentlichen gleich ausgebildet und im wesentlichen aus dem gleichen thermoplastischen Material bestehen und der ebenfalls im wesentlichen gleich ausgebildete Flanschkörper als Adapter derart ausgeführt ist, dass durch ihn eine flüssigkeits- und gasdichte Verbindung sowohl zu dem speziellen Bauteil als auch zum Behälter, d.h. zum Kraftstofftank, geschaffen werden kann. Hierdurch werden ganz wesentlich die Herstellungs- und Montagekosten reduziert.

Nach einer Ausführungsform der Erfindung kann wenigstens auf einem Flächenelement des Copolymer - Flanschkörpers, d.h. dem zweiten Bauelement, wenigstens teilweise eine Schicht aufgebracht sein. Diese Schicht verstärkt die guten Haftungseigenschaften zusätzlich. Die Schicht kann also vollständig oder nur punktuell auf das Flächenelement aufgebracht werden. Bereits eine punktuell aufgebrachte Schicht sichert gute Haftungseigenschaften. Diese Schicht kann ca. 0,001 $\mu$m bis 100 $\mu$m dick sein.

Die Schicht kann beispielsweise durch eine Plasmabeschichtung, beispielsweise wie an sich aus der DE 102 23 865 A1 bekannt, vorgenommen werden. Die Plasmabeschichtung kann an einer Fügefläche des Copolymer - Flanschkörpers mit einer chemisch aktiven Schicht erfolgen, wobei die Schicht z.B. niedermolige Polymerfragmente beinhalten kann.

Der Copolymer - Flanschkörper kann zu ca. 10 bis 85 Gew.-% aus Polyamid und ca. 85 bis 10 Gew. % aus Polyethylen sowie ca. 5 Gew.% Zusätzen bestehen. Insbesondere ist ein gleiches Verhältnis Polyamid zu Polyethylen möglich. Wie die Anteile zu verteilen sind, hängt von den jeweiligen Einsatzbedingungen ab. Es ist aber auch möglich, dass der Flanschkörper aus Schichten mit unterschiedlichen Mischungsverhältnissen bestehen kann.

Ein Polyethylen - Flanschkörper kann ca. zu 95 Gew.% aus einem Polyethylen und ca. 5 Gew.% Zusätzen bestehen. Diese üblichen Zusätze können Stabilatoren, Gleitmittel, Farbstoffe, Metallfilter, metallische Pigmente, gestanzte Metallfilter, Flammschutzmittel, Schlagzähmodifaktoren, Antistatika, Leitfähigkeitsadditive und dgl. sein.

Der Innendurchmesser des Flanschkörpers kann größer als ein Durchmesser der Öffnung des Behälters sein. Hierdurch kann der Verbindungsbereich wenigstens teilweise dem Einflussbereich des Kraftstoffes und dessen Dämpfen entzogen und so den Quellkräften entgegen gewirkt werden.

Das Ringkörperelement und das Rohrkörperelement können einzeln geformt werden. Anschließend kann dann das Ringkörperelement dann mit dem Rohrkörperelement verbunden werden. Das Ringkörperelement kann aber gleichzeitig mit dem Rohrkörperelement geformt und an dieses angeformt werden. Hierdurch verringern sich die Herstellungskosten.

Vor allem aus Gründen der Kostenreduzierung kann das Rohrkörperelement aus einem thermoplastischen Materialkörper bestehen, der wenigstens teilweise mit einem Polyamidkörper beschichtet sein kann. Der thermoplastische Materialkörper kann dabei aus Polyester, Polyacetat, Polyolefin, Fluorthermoplast, Polyphenylsulfid oder ein kostengünstiges Polyamid sein, das eine geringere Kraftstoffbeständigkeit hat.

Ein erstes Rohrkörperelement kann an dem Behälter abgewandten Ende in einer Anschlusseinheit enden. Mit einem solchen Rohrkörperelement kann das Bauteil als ein Stutzen eingesetzt werden.

Ein zweites Rohrkörperelement kann an dem Behälter abgewandten Ende mit einem Deckelelement verschlossen sein. In dieser Form kann ein solches Bauteil als ein Verschlüsselement für nicht benötigte Öffnungen des Behälters eingesetzt werden.

Unterhalb des Deckelelements des zweiten Rohrkörperelements kann wenigstens ein Anschlussrohrelement angeordnet sein. Hiermit liegt ein Gehäuse für ein Tankentlüftungsventil vor, in das ein Ventilelement eingesetzt werden kann.

Die Anschlusseinheit und/oder die Anschlussrohrelemente können mit wenigstens einer umlaufenden Anschlussrippe enden. Damit ist der Anschluss eines Schlauches möglich.

In einem weiteren Aspekt betrifft die Erfindung einen Kraftstofftank, insbesondere einen Kraftfahrzeugkraftstofftank, wie zum Beispiel einen Kraftstofftank für einen Pkw. Der Kraftstofftank hat eine Öffnung und eine äußere Wandung, die aus dem zweiten Kunststoff bestehen kann. Das Kraftstofftankanbauteil wird beispielsweise teilweise durch die Öffnung in dem Kraftstofftank hindurch geführt und in seinem zweiten Bereich mit der äußeren Wandung des Kraftstofftanks stoffschlüssig verbunden, beispielsweise, indem eine Fügefläche des zweiten Bereichs an die äußere Wandung angeschweißt wird.

In einem weiteren Aspekt betrifft die Erfindung ein Verfahren zur Herstellung eines Kraftstofftankanbauteils mit folgenden Schritten: Herstellung eines ersten Bauelements aus einem ersten Kunststoff, wobei der erste Kunststoff kraftstoffbeständig ist; Herstellung eines zweiten Bauelements aus einer Mischung des ersten Kunststoffs mit einem zweiten Kunststoff, wobei die Mischung einen Kompatibilisator beinhaltet, um die ersten und zweiten Kunststoffe mischbar zu machen, wobei der zweite Kunststoff nicht kraftstoffbeständig ist; und stoffschlüssiges Verbinden der ersten und zweiten Bauelemente.

Nach einer Ausführungsform der Erfindung wird eine Fügefläche des zweiten Bereichs vor dem stoffschlüssigen Verbinden vorbehandelt, um die Reaktivität der Fügefläche zu erhöhen. Dies kann durch eine Plasmabehandlung der Fügefläche erfolgen, beispielsweise mit Hilfe einer Plasmadüse, wie sie an sich aus der EP 0 986 939 B1 bekannt ist. Alternativ oder zusätzlich kann eine Vorbehandlung der Fügefläche durch eine Plasmabeschichtung, Beflammen, chemisches Ätzen oder eine mechanische Vorbehandlung erfolgen. Die Aufgrund einer solchen Vorbehandlung erhöhte Reaktivität der Fügefläche ist insbesondere für die Realisierung der stoffschlüssigen Verbindung zwischen den ersten und zweiten Bauelementen vorteilhaft.

Nach einer Ausführungsform der Erfindung wird die stoffschlüssige Verbindung durch zwei oder mehr Komponente Kunststoff-Spritzguss erzeugt. Hierzu wird beispielsweise zunächst das zweite Bauelement durch Einspritzung der Mischung in eine Form realisiert. Die Form wird dann geöffnet, um eine Fügefläche des zweiten Bauelements vorzubehandeln, beispielsweise durch eine Plasmabehandlung oder eine Plasmabeschichtung. Anschließend wird das erste Bauelement hergestellt und mit dem zweiten Bauelement stoffschlüssig verbunden, indem der erste Kunststoff in die Form eingespritzt wird.

Ausführungsformen der Erfindung sind besonders vorteilhaft, da die Formung und Zusammenfügung der ersten und zweiten Bauelemente, das heißt, beispielsweise eines Rohrkörperelements und eines Flanschkörpers, besonders kostengünstig erfolgen kann.

Vorteilhafter Weise kann wenigstens ein Flächenelement, insbesondere eine Fügefläche, des Flanschkörpers mit einem Plasma beschichtet und dann der Flanschkörper mit dem plasmabehandelten Flächenelement fluiddicht mit dem Ringkörperelement verbunden werden. Durch das Beschichten wird bei gleichzeitiger Haftungserhöhung Material gespart.

Die Schicht kann auf zweierlei Weise erzeugt werden:

Zur Erzeugung einer ersten Schicht kann in einer Gasatmosphäre ein Gas eine Entladung zünden, die aus dem Flanschkörpers Ionen extrahiert, zerstäubt und auf kurze Distanz beschleunigt und als Strahl auf das Flächenelement gelenkt werden können.

Hierfür kann die Entladung aus Luft oder Komponenten der Luft, oder einem Edelgas oder Edelgas und deren Verbindungen als Gas gezündet werden. Edelgas kann Helium, Neon, Argon, Krypton, Xenon, Radon und deren Gemische und/oder Verbindungen sein.

In einer Gasatmosphäre in einem Gas können Komponenten enthalten sein, die im offenen Zustand an dem Flächenelement des Flanschkörpers reagieren und eine zweite Schicht ausbilden können.

Hierfür können in Luft als Gas Komponenten organischer Art reagieren.

Es können aber auch in Luft als Gas Komponenten anorganischer Art reagieren.

In beiden Fällen kann ein Flächenelement eines Flanschkörpers oder die Flächenelemente einer Vielzahl Flanschkörper behandelt werden. Dadurch, dass die Behandlung offen, also nicht unter Vakuum, erfolgen kann, werden die Kosten sehr nachhaltig gesenkt.

Zur weiteren Materialoptimierung kann für das Rohrkörperelement zuerst ein Körper aus einem thermoplastischen Material geformt werden, der wenigstens teilweise mit einem Polyamidkörper beschichtet werden kann. Ähnlich wie beim Feuerverzinken wird das kostenintensive Material auf ein kostengünstiges aufgebracht, um überwiegend dessen positive Eigenschaften zu nutzen.

Der thermoplastische Materialkörper kann aus Polyester, Polyacetat, Polyolyfin, Fluorthermoplast, Polyphenylsulfid oder einem kostengünstigeren Polyamid, das eine geringere Kraftstoffbeständigkeit hat, geformt werden.

An ein erstes Rohrkörperelement kann an dem Behälter abgewandten Ende eine Anschlußeinheit geformt werden.

Auf ein zweites Rohrkörperelement kann an dem Behälter abgewandten Ende ein Deckelelement geformt werden. Unterhalb des Deckelelements des zweiten Rohrkörperelements kann wenigstens ein Anschlussrohrelement angeformt werden. Der Flanschkörper kann dann mit dem Tank verschweißt werden. Ob nun Stutzen oder Blindflansch oder Tankentlüftungsventil, alle diese Bauteile können an anderer Stelle in gleicher Art und Weise mit dem Behälter über den Öffnungen dicht angeschweißt werden. Hierdurch werden die Kosten bei der Endmontage verringert.

Ausführungsformen der Erfindung sind mit Bezugnahme auf die Zeichnungen näher erläutert.

Es zeigen:

Fig. 1    ein an einem Behälter befestigtes als Stutzen ausgebildetes Bauteil in einer schematischen Schnittdarstellung,

Fig. 2    ein an einem Behälter befestigtes als Tankentlüftungsventil ausgebildetes Bauteil in einer schematischen Schnittdarstellung,

Fig. 3    in schematischer, auseinander gezogener, geschnittener, teilweiser Darstel- lung eine erste Ausführungsform einer Befestigung eines Rohrkörperele- ments eines Stutzens gemäß Fig. 1 bzw. Tankentlüftungsventils gemäß Fig. 2,

Fig. 4    in schematischer, auseinander gezogener, geschnittener, teilweiser Darstel- lung eine zweite Ausführungsform einer Befestigung eines Rohrkörperele- ments eines Stutzens gemäß Fig. 1 bzw. Tankentlüftungsventils gemäß Fig. 2,

Fig. 5    in schematischer, auseinander gezogener, geschnittener, teilweiser Darstel- lung eine dritte Ausführungsform einer Befestigung eines Rohrkörperele- ments eines Stutzens gemäß Fig. 1 bzw. Tankentlüftungsventils gemäß Fig. 2,

Fig. 6    Ausführungsformen eines ersten Bauelements und eines zweiten Bauele- ments vor dem stoffschlüssigen Verbinden während einer Vorbehandlung,

Fig. 7 Ausführungsformen eines erfindungsgemäßen Kraftstofftanks mit einem Kraftstofftankanbauteil

Fig. 8 Ausführungsformen eines erfindungsgemäßen Verfahrens zur Herstellung eines Kraftstofftankanbauteils.

Elemente der nachfolgenden Figuren, die einander entsprechen, sind im allgemeinen mit denselben Bezugszeichen gekennzeichnet.

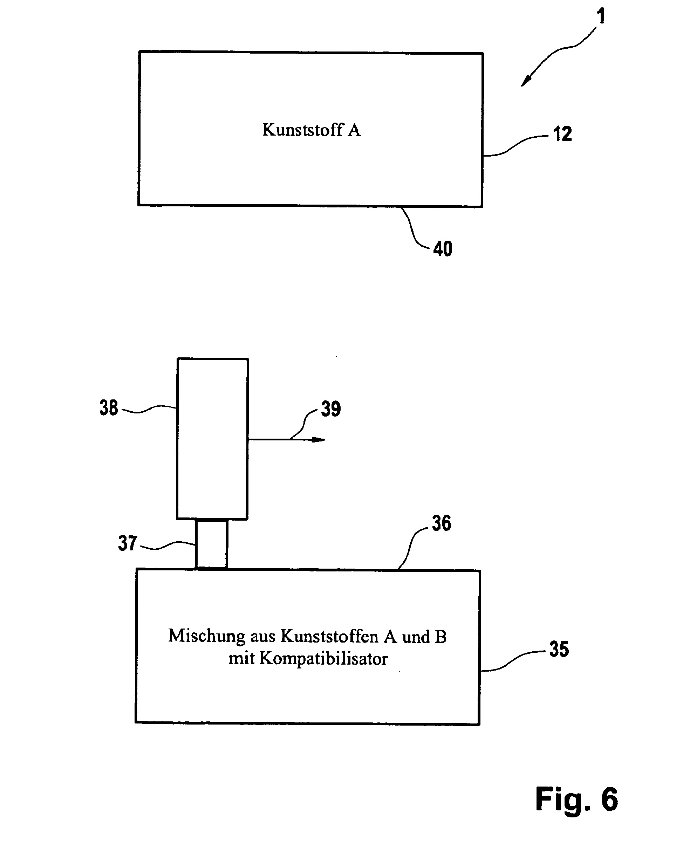

Die Figur 6 zeigt schematisch ein erstes Bauelement 12 einer Ausführungsform eines erfindungsgemäßen Kraftstofftankanbauteils 1. Das erste Bauelement 12 besteht im wesentlichen aus einem ersten Kunststoff A, der kraftstoffbeständig ist. Bei dem Kunststoff A handelt es sich um PA, insbesondere PA 12..

Das Kraftstofftankanbauteil hat ferner ein zweites Bauelement 35, welches im wesentlichen aus einer Mischung des Kunststoffs A und eines Kunststoffs B besteht. Bei dem Kunststoff B handelt es sich um einen nicht kraftstoffbeständigen Kunststoff, der mit dem Kunststoff A nicht mischbar ist.

Bei dem Kunststoff B handelt es sich um PE, insbesondere High Density PE (HDPE). Zur Mischbarmachung der Kunststoffe A und B beinhaltet die Mischung einen Kompatibilisator. Der Kompatibilisator ist ein Copolymer der Kunststoffe A und B; Bei dem Kunststoff A handelt es sich um PA und bei dem Kunststoff B um PE., Bei dem Copolymer beispielsweise um PEgPA (g = graft), das heißt, ein gepfropftes Copolymer handeln. Das gepfropfte Copolymer wird hergestellt, indem beispielsweise das PE mit einem reaktiven Rest versehen wird, zum Beispiel mit Maleinsäureanhydrid oder einem Acetylsäurerest, und indem anschließend das so gepfropfte PE mit dem PA kovalente Bindungen eingeht. Es kann aber auch umgekehrt das PA gepfropft werden, um dann anschließend mit dem PE kovalente Bindungen einzugehen.

Für eine stoffschlüssige Verbindung des ersten Bauteils 12 mit dem zweiten Bauteil 35 wird eine Fügefläche 36 des zweiten Bauteils 35 einer Vorbehandlung unterzogen. In der hier betrachteten Ausführungsform erfolgt die Vorbehandlung durch Beaufschlagung der Fügefläche 36 mit einem Plasma 37. Das Plasma 37 strömt aus einer Plasmadüse 38 auf die Fügefläche 36, wobei die Plasmadüse 38 in Pfeilrichtung 39 entlang der Fügefläche 36 bewegt wird, so dass die gesamte Fügefläche 36 von dem Plasma 37 überstrichen wird.

Durch die Beaufschlagung der Fügefläche 36 mit dem Plasma 37 wird deren Reaktivität erhöht. Dies erleichtert das Eingehen einer stoffschlüssigen Verbindung zwischen den Bauelementen 12 und 35, indem beispielsweise eine Fügefläche 40 des Bauelements 12 und die Fügefläche 36 mittels eines Kunststoffschweißverfahrens plastifiziert werden.

Die Herstellung der Bauelemente 12 und 35 kann auch durch zwei oder mehr Komponenten Spritzguss-Verfahren erfolgen. Hierzu wird beispielsweise zunächst das Bauelement 35 hergestellt, indem die Mischung mit dem Kompatibilisator in eine Form eingespritzt wird. Nach dem Erstarren der Mischung wird die Form geöffnet und die Fügefläche 36 des so erhaltenen Bauelements 35 wird einer Vorbehandlung unterzogen, beispielsweise einer Beaufschlagung mit dem Plasma 37. Nach dieser Vorbehandlung wird die Form wieder geschlossen und der Kunststoff A wird in die Form eingespritzt, um das Bauelement 12 herzustellen. Bei dem Einspritzvorgang des heißen Kunststoffs A wird das Bauelement 35 an seiner Fügefläche 36 plastifiziert, so dass es dort zu einer stoffschlüssigen Verbindung mit dem Bauelement 12 kommt.

Durch diese stoffschlüssige Verbindung der Bauteile 12 und 35 resultiert das fertige Kraftstofftankanbauteil 1, welches dann in seiner Funktionsposition an einen Kraftstofftank angebaut werden kann.

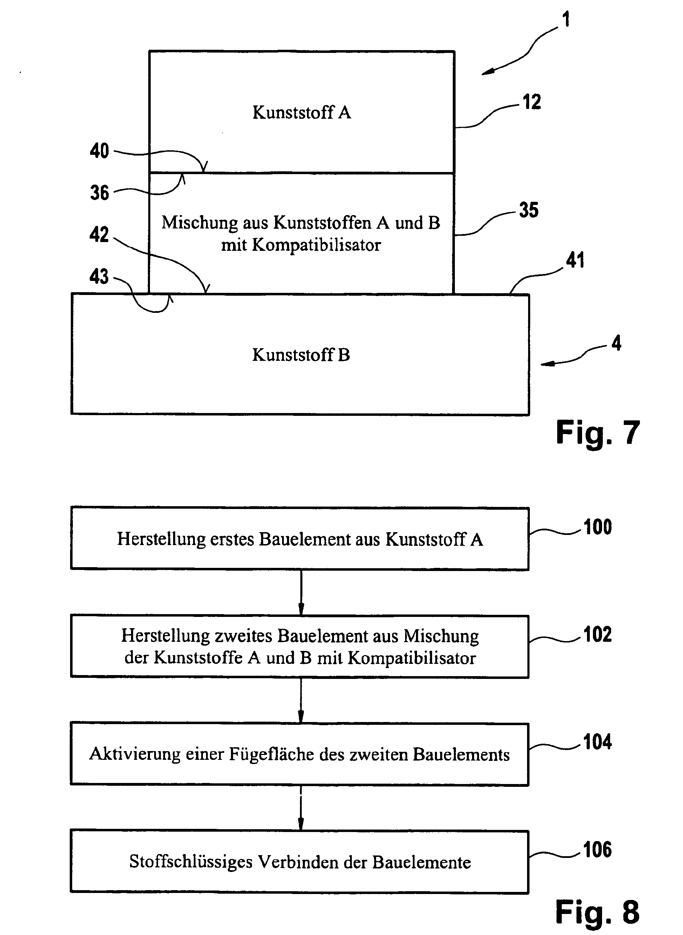

Die Figur 7 zeigt schematisch eine Ausführungsform eines Kraftstofftankanbauteils 1 in einer Funktionsposition, in der es an einem Kraftstofftank 4 angebaut ist. Die Bauelemente 12 und 35 sind entlang ihrer Fügeflächen 40 bzw. 36 stoffschlüssig miteinander verbunden.

Der Kraftstofftank 4 hat eine Außenwandung 41, die im wesentlichen aus dem Kunststoff B besteht. Da die Mischung, aus der das Bauelement 35 besteht, auch den Kunststoff B beinhaltet, ist eine stoffschlüssige Verbindung zwischen dem Bauelement 35 und der Außenwandung 41 möglich. Eine solche stoffschlüssige Verbindung kann mit oder ohne Vorbehandlung einer oder beider der hiervon betroffenen Fügeflächen, d.h. einer Fügefläche 42 des Bauelements 35 und einer an der Außenwandung 41 gebildeten Fügefläche 43 durchgeführt werden. Insbesondere dann, wenn der Anteil des Kunststoffs B an der Mischung größer als der Anteil des Kunststoffs A ist, kann auf eine solche Vorbehandlung der Fügefläche 42 des Bauelements 35 bzw. der Fügefläche 43 der Außenwandung 41 verzichtet werden.

Die Figur 8 zeigt ein Flussdiagramm einer Ausführungsform eines erfindungsgemäßen Herstellungsverfahrens.

In dem Schritt 100 wird ein erstes Bauelement des Kraftstofftankanbauteils aus einem Kunststoff A hergestellt. In dem Schritt 102 wird ein zweites Bauelement des Kraftstofftankanbauteils aus einer Mischung der Kunststoffe A und B hergestellt, wobei die Mischung einen Kompatibilisator zur Mischbarmachung der Kunststoffe A und B beinhaltet.

In dem Schritt 104 erfolgt optional eine Vorbehandlung einer Fügefläche, vorzugsweise des zweiten Bauelements, um diese Fügefläche zu aktivieren, das heißt chemisch reaktiver zu machen. Eine solche Vorbehandlung kann durch eine Plasmabehandlung, Plasmabeschichtung, durch Beflammen, chemisches Ätzen und/oder eine mechanische Vorbehandlung der Fügefläche erfolgen. Alternativ oder zusätzlich kann die Fügefläche des ersten Bauelements einer solchen Vorbehandlung unterzogen werden.

Falls es sich bei dem Kunststoff B um den weniger reaktiven Kunststoff handelt, wie es zum Beispiel der Fall ist, wenn es sich bei dem Kunststoff B um PE und bei dem Kunststoff A um PA handelt, so erfolgt vorzugsweise die Vorbehandlung der Fügefläche des zweiten Bauelements, insbesondere, um den weniger reaktiven Anteil von Kunststoff B in der Mischung durch die Vorbehandlung reaktiver zu machen.

In dem Schritt 106 werden die ersten und die zweiten Bauelemente stoffschlüssig miteinander verbunden.

Die Herstellung des ersten Bauelements in dem Schritt 100 und die Herstellung des zweiten Bauelements in dem Schritt 102 kann mittels verschiedener Kunststoff-Spritzgussformen in gesonderten Verfahrensschritten ablaufen. In diesem Fall werden das erste und das zweite Bauelement gesondert mittels separater Formwerkzeuge gefertigt und danach in dem Schritt 106 miteinander verbunden.

Alternativ kann die Herstellung der ersten und zweiten Bauelemente durch Zwei oder Mehrkomponenten-Kunststoff-Spritzguss in einem einzigen Formwerkzeug erfolgen. Beispielsweise wird zunächst der Kunststoff A in das Formwerkzeug eingespritzt, um das erste Bauelement herzustellen. Anschließend wird die Mischung der Kunststoffe A und B mit dem Kompatibilisator in dasselbe Formwerkzeug eingespritzt, um das zweite Bauelement herzustellen. Optional erfolgt vor dem Einspritzen eine Aktivierung der bereits gefertigten Fügefläche des ersten Bauelements. Durch das Einspritzen der plastifizierten Mischung der Kunststoffe A und B mit dem Kompatibilisator kommt es zu einem stoffschlüssigen Verbinden der ersten und der zweiten Bauelemente.

Alternativ ist es auch möglich zunächst die Mischung der Kunststoffe A und B mit dem Kompatibilisator in das Formwerkzeug einzuspritzen, um das zweite Bauelement herzustellen. Optional wird danach eine Fügefläche des zweiten Bauelements in dem Formwerkzeug durch eine Vorbehandlung aktiviert, wozu es erforderlich sein kann, das Formwerkzeug zu öffnen. Anschließend wird das Formwerkzeug wieder geschlossen und es wird der Kunststoff A eingespritzt, um das erste Bauelement herzustellen und gleichzeitig mit dem zweiten Bauelement stoffschlüssig zu verbinden.

Im weiteren werden einige detaillierte Ausführungsformen des Kraftstofftankanbauteils der Figuren 6 und 7 beschreiben.

Behälter für Kraftstoffe, also Kraftstofftanks, sind in ihrer Formgebung immer komplizierter, um bei beengten Platzverhältnissen ein möglichst großes Fassungsvermögen bereitstellen zu können. Die Formgebung ist je nach Fahrzeugtyp sehr unterschiedlich. Bauteile, wie Stutzen oder Ventile werden deshalb separat einzeln vorgefertigt und erst bei der Endmontage am Behälter angebracht. Die Behälter bestehen in der Regel aus mehreren Schichten, von denen die äußerste aus einem Polyethylen ist.

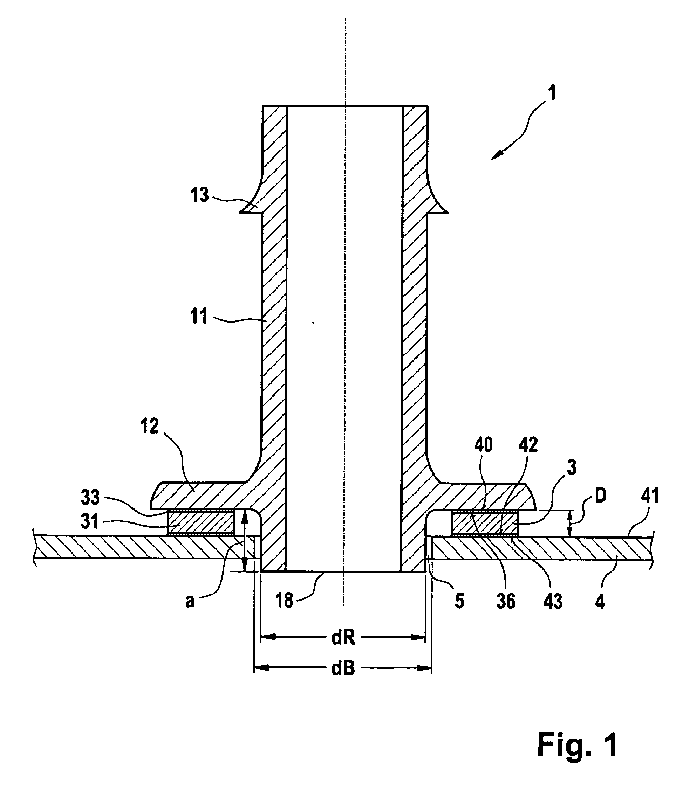

In Fig. 1 ist ein Stutzen 1 gezeigt, der ein Rohrkörperelement 11 mit einem Ringkörperelement 12 aufweist. Das Kraftstofftankanbauteil (vgl. Fig. 6 und 7) ist hier also als Stutzen ausgebildet. Bei dem ersten Bauelement handelt es sich hier um das Rohrkörperelement 11 mit dem Ringkörperelement 12.

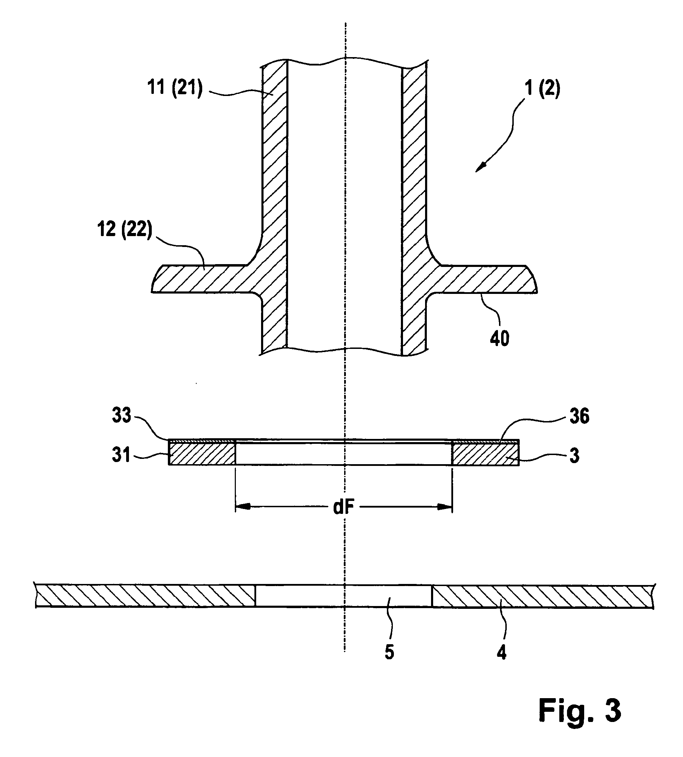

Unterhalb des Ringkörperelements 12 ist ein ringförmiger Flanschkörper 3 mit einer Dicke D angeordnet, bei dem es sich um das zweite Bauelement handelt (vgl. Bauelement 35 der Fig. 6 und 7). Der Flanschkörper 3 befindet sich über einer Öffnung 5 des Behälters 4. Das Ringkörperelement 12 des Rohrkörperelements 11 hat im Bereich der Öffnung 5 einen Abstand a zur Rohraustrittsöffnung 18, der größer als die Dicke D des Flanschkörpers ist. Damit ragt das Rohrkörperelement 11 in die Öffnung 5 des Behälters 4 hinein. Außerdem ist ein Außendurchmesser dR des Rohrkörperelements 11 in etwa so groß wie ein Innendurchmesser dB der Öffnung, aber kleiner als ein Innendurchmesser dF des Flanschkörpers 3 (vgl. auch Fig. 3). Am entgegen gesetzten Ende des Rohrkörperelement 11 befindet sich eine Anschlusseinheit mit einer umlaufenden Halterippe 13.

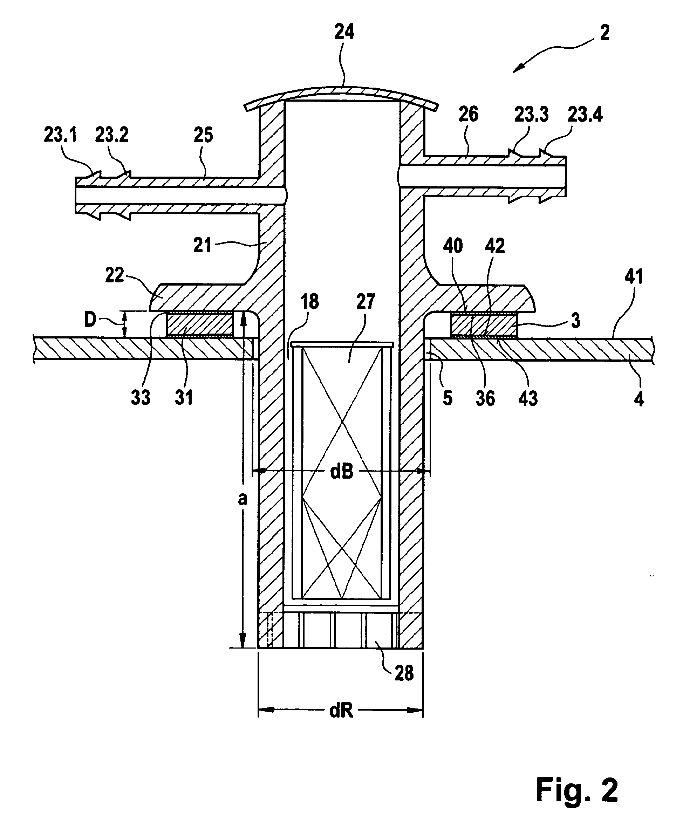

Ein in Fig. 2 gezeigtes Ventilelement 2 weist ein Rohrkörperelement 21 mit einem Ringkörperelement 22 auf.

Unterhalb des Ringkörperelements 22 ist ebenfalls der ringförmige Flanschkörper 3 mit der Dicke D angeordnet. Das Kraftstofftankanbauteil (vgl. Fig. 6 und 7) ist hier also als Ventilelement 2 ausgebildet. Bei dem ersten Bauelement handelt es sich hier um das Rohrkörperelement 21 mit dem Ringkörperelement 22. Bei dem Flanschkörper 3 handelt es sich um das zweite Bauelement (vgl. Bauelement 35 der Fig. 6 und 7).

Der Flanschkörper befindet sich über der Öffnung 5 des Behälters 4. Das Ringkörperelement 22 des Rohrkörperelements 21 hat im Bereich der Öffnung 5 gleichfalls einen Abstand a zu seinem Ende, der wesentlich größer als die Dicke D des Flanschkörpers 3 ist. Damit ragt das Rohrkörperelement 21 weit in die Öffnung 5 des Behälters 4 hinein. Am Ende des Rohrkörperelements 21 sind Rohraustrittsöffnungen 28 angeordnet. Außerdem ist der Außendurchmesser dR des Rohrkörperelements 21 in etwa so groß wie der Innendurchmesser dB der Öffnung, aber kleiner als der Innendurchmesser dF des Flanschkörpers 3 (vgl. auch Fig. 3).

Das entgegen gesetzte Ende des Rohrkörperelements 21 ist mit einem Deckelelement 24 verschlossen. Unterhalb des Deckelelements sind am Rohrkörperelement 21 Anschlussrohrelemente 25 und 26 mit wenigstens einer umlaufenden Halterippe 23.1, 23.2, 23.3, 23.4 angeordnet.

In diesem so vorbereiteten Gehäuse ist ein Ventilelement 27 angeordnet.

Es besteht nun die Aufgabe, ein erstes Bauelement in Gestalt eines Stutzens oder einer Ventileinheit an dem Behälter 4 über der Öffnung 5 anzubringen.

Bestehen das erste Bauelement und die Außenwandung 41 des Behälters 4 aus nicht kompatiblen thermoplastischen Kunststoffen, wird zur Verbindung des ersten Bauelements mit der Außenwandung 41 ein zweites Bauelement als Verbindungsadapter eingesetzt. Der Verbindungsadapter übernimmt die Funktion, auf der einen Seite eine fluiddichte Verbindung mit dem ersten Bauelement und auf der anderen Seite eine eben solche mit dem Behälter 4 einzugehen.

Der Stutzen 1 gemäß Fig. 1 und die Ventileinheit 2 gemäß Fig. 2 sind im Bereich Rohrkörperelement 11, 21, Ringkörperelement 12, 22 (erstes Bauelement) und ringförmiger Flanschkörper 3 (zweites Bauelement) ähnlich ausgebildet. Das Ringkörperelement geht dabei nasenförmig aus dem Rohrkörperelement hervor. Das Unterseitenflächenelement des Ringkörperelements ist im Wesentlichen eben ausgebildet. Die äußeren Übergänge sind gerundet, während die Innenwandung glatt durchgeht.

Die Teile 1 und 3 sind in den Fig. 3 bis 5 in verschiedenen Ausführungsformen gezeigt.

In Fig. 3 ist eine erste Ausführungsform dargestellt. Rohrkörperelement 11, 21 und Ringkörperelement 12, 22 bestehen aus Polyamid, im folgenden PA. Die äußere Schicht, d.h. die Außenwandung 41, des mehrschichtigen Behälters 4 ist, wie bereits erwähnt, aus Polyethylen, im folgenden PE.

Der Flanschkörper 3, d.h. das zweite Bauelement, besteht aus einer Mischung von PE und PA mit einem gepfropften PEgPA Copolymer als Kompatibilisator, und ist als Copolymer - Flanschkörper 31 ausgebildet. Die Mischung kann Zusätze wie Stabilisatoren, Gleitmittel, metallische Pigmente und dgl. aufweisen.

Ein Flächenelement des Flanschkörpers 3, d.h. dessen Fügefläche 36, wird dann vorbehandelt. Dies kann beispielsweise durch eine Plasmabehandlung oder eine Plasmabeschichtung erfolgen, durch die eine Schicht 33 aufgebracht. Die Dicke der Schicht kann ca. 0,001 μm bis 100 μm betragen. Nach der Vorbehandlung werden der Flanschkörper 3 und das Rohrkörperelement 11, 21 an den Fügeflächen 40, 36 miteinander stoffschlüssig verbunden.

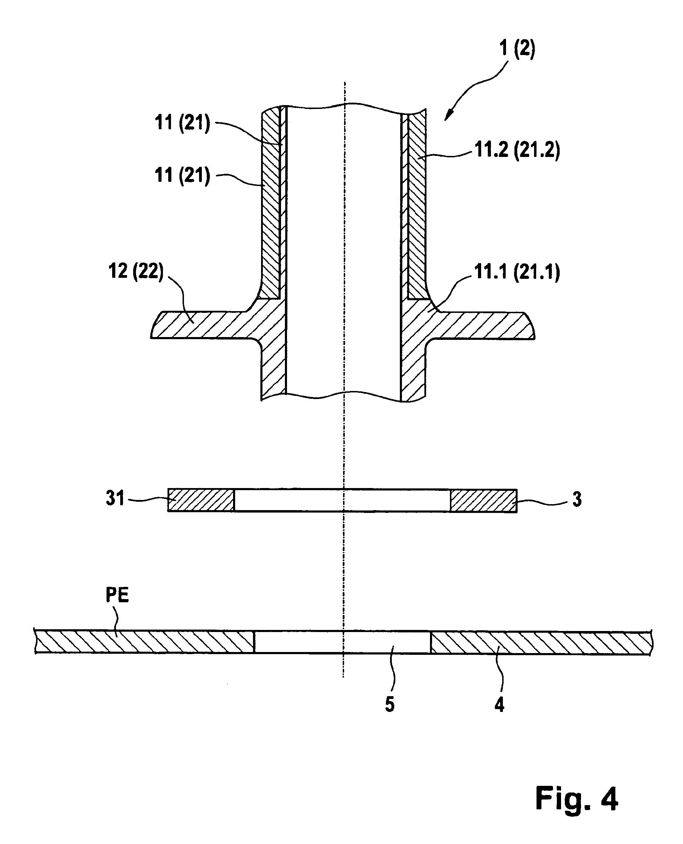

Eine zweite Ausführungsform zeigt Fig. 4. Rohrkörperelement 11, 21 und Ringkörperelement 12, 22 bestehen aus einem kelchförmigen PA - Teilkörper 11.1, 21.1, d.h. dem erste Bauelement, um den über dem Ringkörperelement ein Teilkörper 11.2, 21.2 geformt ist. Bei dem Teilkörper 11.2, 21.2 handelt es sich um das zweite Bauelement aus der Mischung von PE und PA mit einem gepfropften PEgPA Copolymer als Kompatibilisator. Der Teilkörper 11.2, 21.2 ist mit dem Rohrkörperelement 11, 21 stoffschlüssig verbunden.

Die äußere Schicht, d.h. die Außenwandung, des mehrschichtigen Behälters 4 ist auch hier aus PE.

Bei dem Flanschkörper 3 handelt es sich um ein weiteres zweites Bauelement, welches als Copolymer - Flanschkörper 31 ausgebildet ist. Er besteht aus der Mischung von PE und PA mit einem gepfropften PEgPA Copolymer als Kompatibilisator und optional Zusätzen wie Stabilisatoren, Gleitmittel, metallische Pigmenten und dgl.

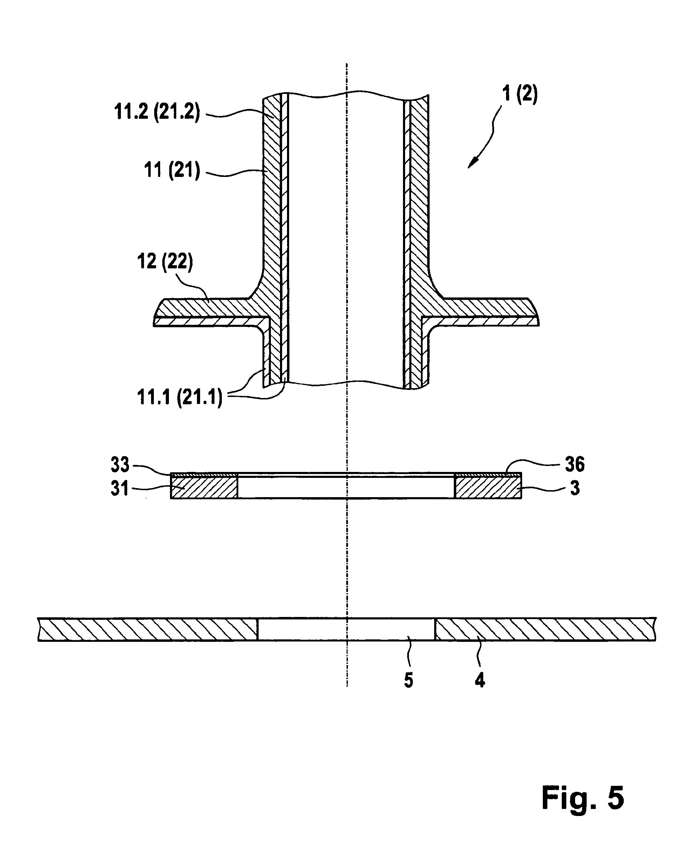

In Fig. 5 ist eine dritte Ausführungsform gezeigt. Rohrkörperelement 11, 21 und Ringkörperelement 12, 22 bestehen aus einem Teilkörper 11.2, 21.2 , d.h. dem zweiten Bauelement, in Form eines Kemkörpers, der wenigstens an den Kraftstoffdämpfen bzw. dem Kraftstoff ausgesetzten Flächen mit PA - Teilkörpern 11.1, 21.1, d.h. den ersten Bauelementen, beschichtet, d.h. stoffschlüssig verbunden, ist.

Die äußere Schicht, d.h. die Außenwandung 41, des mehrschichtigen Behälters 4 ist aus PE. Der Flanschkörper 3. bei dem es sich um ein weiteres zweites Bauelement handelt, ist als Copolymer - Flanschkörper 31 ausgebildet.

Die Herstellung und die Befestigung des Bauteils als Stutzen 1 gemäß Fig. 1 bzw. des Bauteils als Tankentlüftungsventil 2 gemäß Fig. 2 wird unter zu Hilfenahme der Fig. 3 erläutert.

Zuerst werden aus PA das Rohrkörperelement 11, 21 mit dem ringförmigen Flanschkörperelement 12, 21 (erstes Bauelement) geformt.

Bei dem Stutzen 1 endet das Rohrkörperelement 11 in der umlaufenden Halterippe 13. Das entgegengesetzte Ende 28 ist von der Unterkante Flanschkörperelement gerade so lang, dass es kurz über die Innenwandung des Behälters 4 in diesen hinein reichen kann.

Bei dem Tankentlüftungsventil 2 hingegen wird das Rohrkörperelement 21 mit dem Deckelelement 24 verschlossen. Unterhalb des Deckelelements werden an das Rohrkörperelement 21 Anschlussrohrelemente 25, 26 mit Halterippen 23.1, ..., 23.4 angeformt. Das dem Deckelelement 24 gegenüber liegende Ende des Rohrkörperelements 21 ist so lang, dass es weit in den Behälter hinein ragen und in seinem Inneren das Ventilelement 27 aufnehmen kann. Damit die Gase ungehindert in das Ventilelement einfließen können, werden Rohraustrittsöffnungen 28 eingeformt.

Aus der Mischung von PE und PA mit einem gepfropften PEgPA Copolymer als Kompatibilisator wird anschließend der Flanschkörper 3 (zweites Bauelement) ausgebildet.

Das erste und das zweite Bauelement werden durch Spritzgießen geformt.

Die Fügefläche 36 wird dann plasmabehandelt und so die Schicht 33 ausgebildet.

Das Plasma ist ein Gemisch aus positiven und negativen Ladungsträgern in relativ großer Dichte, neutralen Teilchen und Photonen. Die Dichten der positiven Ionen und der Elektronen sind dabei so groß, dass sich die Ladungen im zeitlichen Mittel an jeder Stelle kompensieren. Das Plasma ist als eigener Aggregatzustand aufzufassen.

Bei der Plasmaerzeugung wird in einer Gasatmosphäre, z. B. Luft und deren Komponenten oder einer Edelgasatmosphäre, z. B. Helium, Neon, Argon, Krypton, Xenon, Radon und deren Verbindungen, eine Entladung gezündet. Die Ionen werden aus dem Plasma vom Träger, d. h. der Fügefläche 36 als Target, d. h. Schichtmaterial extrahiert, das dabei zerstäubt wird. Hierbei werden Ionen in der Ionenquelle erzeugt und auf kurze Distanz beschleunigt und als Strahl auf das Flächenelement 36 gelenkt. Hierdurch wächst unter offenen Bedingungen die Schicht 33.

Es können aber auch in einem Gas, insbesondere Luft, Komponenten enthalten sein, die im offenen Zustand an der Fügefläche 36 reagieren und die Schicht 33 ausbilden. Die Komponenten können organischer oder anorganischer Art sein. Die Schicht 33 wird so in dem bereits genannten Dickenbereich von ca. 0,001 $\mu$m bis 100 $\mu$m aufgebracht.

Abschließend werden die ersten und zweiten Bauelemente miteinander verschweißt. Alternativ erfolgt die Herstellung mittels zweikomponenten Spritzguss.

Damit sind sowohl Stutzen 1 als auch Tankentlüftungsventil 2 für eine Befestigung am Behälter 4 vorbereitet und werden zur Endmontage versandt.

Am Einsatzort angekommen, werden der Stutzen 1 und das Tankentlüftungsventil 2 an der für sie vorgesehenen Öffnung 4 auf dem Behälter aus PE angeschweißt. Für die Montage ist von Vorteil, dass alle Bauteile hierbei mit dem gleichen Verbindungsadapter versehen sind. Der Stutzen 1 und das Tankentlüftungsventil 2 werden durch ihre Gestaltung und Kunststoffe flüssigkeitsdicht mit dem Behälter 4 verbunden.

Die Volumenausdehnungsindizes

$$PE < PE/PA < PA$$

sind so gewählt, dass die stoffschlüssigen Verbindungen einer möglichen Quellung sicher standhalten, da eine Quellung - wenn auch in geringem Maße - auch bei kraftstoffbeständigem Kunststoff erfolgen kann.

**Patentansprüche**

1. Kraftstofftankanbauteil mit einem ersten Bereich (12; 11, 12; 21, 22; 11.1; 21.1), der aus einem ersten Kunststoff (A) besteht, und einem zweiten Bereich (35; 3; 11.2; 21.2), wobei der zweite Bereich aus einer Mischung des ersten Kunststoffs und eines zweiten Kunststoffs (B) besteht, wobei der erste und der zweite Kunststoff nicht mischbar sind, wobei die Mischung einen Kompatibilisator zur Mischbarmachung der ersten und zweiten Kunststoffe enthält, wobei der erste und der zweite Bereich stoffschlüssig miteinander verbunden sind, wobei es sich bei dem ersten Kunststoff um einen kraftstoffbeständigen Kunststoff handelt, und wobei es sich bei dem zweiten Kunststoff um einen nicht kraftstoffbeständigen Kunststoff handelt, wobei es sich bei dem Kompatibilisator um ein Copolymer des ersten und des zweiten Kunststoffs handelt, wobei es sich bei dem ersten Kunststoff um Polyamid (PA) und wobei es sich bei dem zweiten Kunststoff um Polyethylen (PE) handelt, wobei der zweite Bereich mit dem ersten Bereich über eine erste Fügefläche verbunden ist, wobei der zweite Bereich für eine stoffschlüssige Verbindung mit einem dritten Bereich (43) über eine zweite Fügefläche ausgebildet ist, wobei sich der dritte Bereich an einer Außenwandung (41) eines Kraftstofftanks (4) befindet, wobei der dritte Bereich den zweiten Kunststoff aufweist, und wobei der Anteil des Copolymers (AB) in der Mischung höchstens 15 Gew.-%, beträgt.

2. Kraftstofftankanbauteil nach Anspruch 1, wobei es sich um ein gepfropftes Copolymer handelt.

3. Kraftstofftankanbauteil nach Anspruch 1 oder 2, wobei das Copolymer einen zusätzlichen Kompatibilisator aufweist.

4. Kraftstofftankanbauteil nach einem der vorhergehenden Ansprüche, wobei der Anteil des ersten Kunststoffs in der Mischung geringer als der Anteil des zweiten Kunststoffs ist.

5. Kraftstofftankanbauteil nach Anspruch 4, wobei der Anteil des ersten Kunststoffs maximal 35 Gew.-%, insbesondere zwischen 20 Gew.-% bis 30 Gew.-% beträgt.

6. Kraftstofftank, insbesondere Kraftfahrzeugkraftstofftank (4), mit zumindest einem Kraftstofftankanbauteil (1; 2) nach einem der vorhergehenden Ansprüche.

7. Verfahren zur Herstellung eines Kraftstofftankanbauteils mit folgenden Schritten:

   - Herstellung eines ersten Bauelements (12; 11, 12; 21, 22; 11.1; 21.1)) aus einem ersten Kunststoff (A), wobei der erste Kunststoff kraftstoffbeständig ist,
   - Herstellung eines zweiten Bauelements (35; 3; 11.2; 21.2) aus einer Mischung des ersten Kunststoffs mit einem zweiten Kunststoff, wobei die Mischung einen Kompatibilisator beinhaltet, um die ersten und zweiten Kunststoffe mischbar zu machen, wobei der zweite Kunststoff nicht kraftstoffbeständig ist,
   - stoffschlüssiges Verbinden der ersten und zweiten Bauelemente,

   wobei es sich bei dem Kompatibilisator um ein Copolymer des ersten und des zweiten Kunststoffs handelt, wobei das stoffschlüssige Verbinden der ersten und zweiten Bauelemente durch Verschweißen erfolgt, wobei es sich bei dem ersten Kunststoff um Polyamid (PA) und wobei es sich bei dem zweiten Kunststoff um Polyethylen (PE) handelt, und wobei der Anteil des Copolymers (AB) in der Mischung höchstens 15 Gew.-%, beträgt.

8. Verfahren nach Anspruch 7, wobei es sich um ein gepfropftes Copolymer handelt.

9. Verfahren nach Anspruch 8, wobei zur Herstellung des gepfropften Copolymers der zweite Kunststoff gepfropft wird, um anschließend mit dem ersten Kunststoff kovalente Bindungen einzugehen.

10. Verfahren nach einem der vorhergehenden Ansprüche 7 bis 10, wobei eine Fügefläche (36; 42) des zweiten Bauelements vor dem stoffschlüssigen Verbinden einer Vorbehandlung unterzogen wird.

11. Verfahren nach Anspruch 10, wobei die Vorbehandlung eine oder mehrere der folgenden Maßnahmen beinhaltet:

 - Plasmabehandlung,
 - Plasmabeschichtung,
 - Beflammen,
 - chemisches Ätzen,
 - mechanische Vorbehandlung, insbesondere Aufrauen.

12. Verfahren nach einem der vorhergehenden Ansprüche 7 bis 11, wobei das Kraftstofftankanbauteil durch zwei oder mehr Komponenten Kunststoff-Spritzguss-Verfahren hergestellt wird, wobei zunächst das zweite Bauelement hergestellt wird, indem die Mischung in eine Form eingespritzt wird, und wobei nachfolgend das zweite Bauelement hergestellt und mit dem ersten Bauelement stoffschlüssig verbunden wird, indem der erste Kunststoff in die Form eingespritzt wird.

13. Verfahren nach Anspruch 12, wobei eine Fügefläche (36) des zweiten Bauelements vor dem Einspritzen des ersten Kunststoffs einer Vorbehandlung unterzogen wird.

14. Verfahren nach einem der vorhergehenden Ansprüche 7 bis 13, wobei zur Herstellung des Copolymers ein zusätzlicher Kompatibilisator verwendet wird, der einer Mischung des ersten und des zweiten Kunststoffs in fester oder flüssiger Form zugegeben wird, und der zumindest teilweise bei der Copolymerisierung verbraucht wird.

15. Verfahren nach Anspruch 14, wobei der zusätzliche Kompatibilisator reaktive Isocyanatgruppen und/ oder Oligomere mit Epoxidgruppen und/ oder (Maleinsäure-)Anhydrid-Gruppen oder Oxazolin-Gruppen beinhaltet.

**Claims**

1. Fuel tank attachment with a first region (12; 11, 12; 21, 22; 11.1; 21.1), which consists of a first plastic (A), and a second region (35; 3; 11.2; 21.2), the second region consisting of a mixture of the first plastic and a second plastic (B), the first plastic and the second plastic not being miscible, the mixture containing a compatibility-enhancing agent to make the first and second plastics miscible, the first and second regions being materially bonded to one another, the first plastic being a fuel-resistant plastic, and the second plastic being a non-fuel-resistant plastic, the compatibility-enhancing agent being a copolymer of the first and second plastics, the first plastic being polyamide (PA) and the second plastic being polyethylene (PE), the second region being joined to the first region by way of a first joining area, the second region being designed for a material bond with a third region (43) by way of a second joining area, the third region being located on an outer wall (41) of a fuel tank (4), the third region having the second plastic, and the proportion of the copolymer (AB) in the mixture being at most 15% by weight.

2. Fuel tank attachment according to Claim 1, comprising a grafted copolymer.

3. Fuel tank attachment according to Claim 1 or 2, the copolymer having an additional compatibility-enhancing agent.

4. Fuel tank attachment according to one of the preceding claims, the proportion of the first plastic in the mixture being less than the proportion of the second plastic.

5. Fuel tank attachment according to Claim 4, the proportion of the first plastic being at most 35% by weight, in particular between 20% by weight and 30% by weight.

6. Fuel tank, in particular a motor-vehicle fuel tank (4), with at least one fuel tank attachment (1; 2) according to one of the preceding claims.

7. Method for producing a fuel tank attachment with the following steps:

 - producing a first component (12; 11, 12; 21, 22; 11.1; 21.1) from a first plastic (A), the first plastic being fuel-resistant,
 - producing a second component (35; 3; 11.2; 21.2) from a mixture of the first plastic with a second plastic, the mixture containing a compatibility-enhancing agent in order to make the first and second plastics miscible, the second plastic being non-fuel-resistant,
- materially bonding the first and second components,

the compatibility-enhancing agent being a copolymer of the first and second plastics, the material bonding of the first and second components being performed by welding, the first plastic being polyamide (PA) and the second plastic being polyethylene (PE) and the proportion of copolymer (AB) in the mixture being at most 15% by weight.

8. Method according to Claim 7, comprising a grafted copolymer.

9. Method according to Claim 8, production of the grafted copolymer being effected by the second plastic being grafted, in order subsequently to enter into covalent bonds with the first plastic.

10. Method according to one of the preceding Claims 7 to 10, a joining area (36; 42) of the second component being subjected to a pretreatment before the material bonding.

11. Method according to Claim 10, the pretreatment comprising one or more of the following measures:

    - plasma treatment,
    - plasma coating,
    - flame treatment,
    - chemical etching,
    - mechanical pretreatment, in particular roughening.

12. Method according to one of the preceding Claims 7 to 11, the fuel tank attachment being produced by a two-or-more-component plastics injection-moulding process, the second component being produced first, by the mixture being injected into a mould, and then the second component being produced and materially bonded with the first component, by the first plastic being injected into the mould.

13. Method according to Claim 12, a joining area (36) of the second component being subjected to a pretreatment before the injection of the first plastic.

14. Method according to one of the preceding Claims 7 to 13, an additional compatibility-enhancing agent being used for the production of the copolymer, said agent being added in a solid or liquid form to a mixture of the first and second plastics and at least partially used up during the copolymerization.

15. Method according to Claim 14, the additional compatibility-enhancing agent comprising reactive isocyanate groups and/or oligomers with epoxy groups and/or (maleic acid) anhydride groups or oxazoline groups.

## Revendications

1. Composant pour réservoir de carburant,
présentant une première partie (12; 11, 12, 21, 22; 11.1: 21.1) constituée d'une première matière synthétique (A) et une deuxième partie (35; 3; 11.2; 21.2),
la deuxième partie étant constituée d'un mélange de la première matière synthétique et d'une deuxième matière synthétique (B),
la première et la deuxième matière synthétique n'étant pas miscibles l'une dans l'autre,
le mélange contenant un agent de compatibilisation qui permet de mélanger la première et la deuxième matière synthétique,
la première et la deuxième partie étant reliées l'une à l'autre en correspondance de matière,
la première matière synthétique étant une matière synthétique qui résiste au carburant et la deuxième matière synthétique étant une matière synthétique qui ne résiste pas au carburant,
l'agent de compatibilisation étant un copolymère de la première et de la deuxième matière synthétique,
la première matière synthétique étant un polyamide (PA) et la deuxième matière synthétique un polyéthylène (PE),
la deuxième partie étant reliée à la première partie par une première surface de jonction,
la deuxième partie étant configurée pour pouvoir être reliée en correspondance de matière avec une troisième partie (43) par une deuxième surface de jonction,
la troisième partie étant située sur la paroi extérieure (41) d'un réservoir (4) à carburant,
la troisième partie présentant la deuxième matière synthétique et la teneur du copolymère (AB) dans le mélange étant d'au plus 15 % en poids.

2. Composant pour réservoir de carburant selon la revendication 1, dans lequel le copolymère est un copolymère greffé.

3. Composant pour réservoir de carburant selon la revendication 1 ou 2, dans lequel le copolymère présente un agent supplémentaire de compatibilisation.

4. Composant pour réservoir de carburant selon l'une des revendications précédentes, dans lequel la teneur de la première matière synthétique dans le mélange est inférieure à la teneur de la deuxième matière synthétique.

**5.** Composant pour réservoir de carburant selon la revendication 4, dans lequel la teneur de la première matière synthétique est d'au plus 35 % en poids et est en particulier comprise entre 20 % en poids et 30 % en poids.

**6.** Réservoir à carburant, en particulier réservoir (4) à carburant pour véhicule automobile, présentant au moins un composant (1 ; 2) pour réservoir à carburant selon l'une des revendications précédentes.

**7.** Procédé de fabrication d'un composant pour réservoir à carburant, le procédé présentant les étapes suivantes :

- préparation d'un premier composant (12 ; 11, 12 ; 21, 22 ; 11.1 ; 21.1) en une première matière synthétique (A), la première matière synthétique résistant au carburant,
- préparation d'un deuxième composant (35 ; 3, 11.2 ; 21.2) en un mélange de la première matière synthétique avec une deuxième matière synthétique, le mélange contenant un agent de compatibilisation qui rend miscibles la première et la deuxième matière synthétique, la deuxième matière synthétique ne résistant pas au carburant et
- liaison en correspondance de matière du premier composant au deuxième composant,
l'agent de compatibilisation étant un copolymère de la première et de la deuxième matière synthétique,
la liaison en correspondance de matière entre le premier composant et le deuxième composant s'effectuant par soudage,
la première matière synthétique étant un polyamide (PA) et la deuxième matière synthétique un polyéthylène (PE),
la teneur du copolymère (AB) dans le mélange étant d'au plus 15 % en poids.

**8.** Procédé selon la revendication 7, dans lequel le copolymère est un copolymère greffé.

**9.** Procédé selon la revendication 8, dans lequel pour préparer le copolymère greffé, on greffe la deuxième matière synthétique pour ensuite former des liaisons covalentes avec la première matière synthétique.

**10.** Procédé selon l'une des revendications 7 à 9 qui précèdent, dans lequel une surface de jonction (36 ; 42) du deuxième composant subit un prétraitement avant la liaison en correspondance de matière.

**11.** Procédé selon la revendication 10, dans lequel le prétraitement recourt à une ou plusieurs des dispositions suivantes :

- traitement au plasma,
- enduction au plasma,
- traitement à la flamme,
- gravure chimique,
- prétraitement mécanique, en particulier formation d'une rugosité.

**12.** Procédé selon l'une des revendications 7 à 11, dans lequel le composant de réservoir à carburant est fabriqué en utilisant un procédé de moulage par injection de matière synthétique à un ou plusieurs composants, le deuxième composant étant fabriqué d'abord en injectant le mélange dans un moule, le deuxième composant étant ensuite fabriqué et relié en correspondance de matière au premier composant en injectant la première matière synthétique dans le moule.

**13.** Procédé selon la revendication 12, dans lequel une surface de fonction (36) du deuxième composant subit un prétraitement avant l'injection de la première matière synthétique.

**14.** Procédé selon l'une des revendications 7 à 13 qui précèdent, dans lequel pour préparer le copolymère, on utilise un agent supplémentaire de compatibilisation qui est ajouté sous forme solide ou liquide au mélange de la première et de la deuxième matière synthétique, cet agent de compatibilisation étant au moins en partie consommé lors de la copolymérisation.

**15.** Procédé selon la revendication 14, dans lequel l'agent supplémentaire de compatibilisation contient des groupes isocyanate et/ou des oligomères qui présentent des groupes époxy et/ou des groupes anhydride d'acide maléique ou des groupes oxazoline.

**Fig. 1**

**Fig. 2**

Fig. 3

**Fig. 4**

11.2 (21.2)

11 (21)

12 (22)

11.1 (21.1)

1 (2)

33
31

36
3

5
4

**Fig. 5**

**1**

**12**

Kunststoff A

**40**

**38**

**39**

**37**

**36**

Mischung aus Kunststoffen A und B
mit Kompatibilisator

**35**

**Fig. 6**

**1**

**12**

**40**

Kunststoff A

**36**

Mischung aus Kunststoffen A und B
mit Kompatibilisator

**35**

**42**

**41**

**43**

Kunststoff B

**4**

# Fig. 7

Herstellung erstes Bauelement aus Kunststoff A

**100**

Herstellung zweites Bauelement aus Mischung
der Kunststoffe A und B mit Kompatibilisator

**102**

Aktivierung einer Fügefläche des zweiten Bauelements

**104**

Stoffschlüssiges Verbinden der Bauelemente

**106**

# Fig. 8

**EP 2 129 708 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19535413 C1
- DE 10062997 A1
- DE 10223865 A1
- EP 0986939 B1